**Europäisches Patentamt**

**European Patent Office**

**Office européen des brevets**

(11) Veröffentlichungsnummer: **0 274 053**
**B1**

(12) **EUROPÄISCHE PATENTSCHRIFT**

(45) Veröffentlichungstag der Patentschrift:
**10.10.90**

(51) Int. Cl.⁵: **C08J 3/16**, B01D 1/18

(21) Anmeldenummer: **87117651.7**

(22) Anmeldetag: **28.11.87**

(54) Verfahren zur Herstellung von Polymerisatpulvern durch Zerstäubungstrocknung.

(30) Priorität: **10.12.86 DE 3642106**

(43) Veröffentlichungstag der Anmeldung:
**13.07.88 Patentblatt 88/28**

(45) Bekanntmachung des Hinweises auf die Patenterteilung:
**10.10.90 Patentblatt 90/41**

(84) Benannte Vertragsstaaten:
**DE FR GB IT**

(56) Entgegenhaltungen:
**GB-A- 952 628**
**GB-A- 1 516 476**
**GB-A- 1 569 637**
**US-A- 4 292 424**

(73) Patentinhaber: **BAYER AG,**
**D-5090 Leverkusen 1 Bayerwerk(DE)**

(72) Erfinder: **Lindner, Christian, Dr., Riehler Str. 200,**
**D-5000 Köln 60(DE)**
Erfinder: **Roth, Edwin, Dr., Im Wiedenhof 1,**
**D-5060 Bergisch-Gladbach 1(DE)**
Erfinder: **Koch, Otto, Dr., Morgengraben 12,**
**D-5000 Köln 80(DE)**
Erfinder: **Braese, Hans-Eberhard, D.I., Käthe**
**Kollwitz-Str. 3, D-5000 Köln 71(DE)**
Erfinder: **Bamelis, Pol, Dr., Am Brommbacher Berg 13,**
**D-5063 Overath(DE)**

**Beschreibung**

Gegenstand der Erfindung ist ein Verfahren zur Herstellung von Polymerisatpulvern durch Zerstäubungstrocknung, worin unmittelbar vor der Zerstäubung flüssige Agentien mit dem als Dispersion vorliegenden Polymerisat vermischt werden und sofort anschließend getrocknet wird.

Aus Dispersionen - der Begriff schließt auch Emulsionen ein - von Polymerisaten, die technische Chemiewerkstoffe, insbesondere thermoplastische Formmassen darstellen, können die Polymerisate durch Zerstäubungstrocknung, insbesondere Sprühtrocknung, in Pulverform gewonnen werden. Das erhaltene Pulver kann dann zu technischen Formkörpern weiterverarbeitet werden, beispielsweise durch übliche thermoplsatische Verarbeitung.

Bei dieser Art der Aufarbeitung von Polymerdispersionen ist eine Reinigung des Polymerisats nicht möglich, so daß Hilfsstoffe und Verunreinigungen (aus der Polymerisation) in das Endprodukt gelangen. Dispersionen von Polymerisaten sind oft alkalisch oder sauer; die Acidität oder Basizität bleibt im Endprodukt erhalten. Korrigierende Zusätze wie Säuren, Basen, Salze, Lösungsmittel, Reagenzien können vor der Zerstäubungstrocknung nicht in die Polymerdispersion eingebracht werden, weil sie diese so verändern (z.B. durch Koagulation, Verquaddelung, Viskositätsveränderung, Aufrahmung), daß eine Zerstäubungstrocknung kaum noch möglich ist.

Es wurde nun ein Weg gefunden, wie man diesen Dispersionen von Polymerisaten flüssige Agenzien zugeben und sie dennoch einer Zerstäubungstrocknung unterwerfen kann. Die so erhaltenen Polymerisatpulver besitzen beträchtlich verbesserte physikalische Eigenschaften, insbesondere für die Verwendung als thermoplastische Formmassen.

Gegenstand der Erfindung ist somit ein Verfahren zur Herstellung von Polymerisat-Pulvern aus Polymerisat-Dispersionen, das dadurch gekennzeichnet ist, daß man eine Polymerisat- Dispersion kontinuierlich in ein Zerstäubungsaggregat einspeist, getrennt davon aber gleichzeitig ein flüssiges Agens, wobei Dispersion und flüssiges Agens in höchstens einer Sekunde vollständig gemischt werden und unmittelbar anschließend das Gemisch unter Verdunstung oder Verdampfung flüchtiger Anteile zu einem Pulver mit Teilchen eines mittleren Durchmessers von 0,05 bis 1 mm trocknet.

Ein weiterer Gegenstand der Erfindung sind die so erhaltenen Polymerpulver.

Als Polymerisat-Dispersionen kommen wäßrige oder organische Dispersionen infrage, insbesondere solche in Alkoholen, Estern, Ketonen, Aromaten. Bevorzugt sind wäßrige Dispersionen.

Die flüssigen Agentien sind bevorzugt anorganische und organische Säuren wie Schwefelsäuren, Salzsäure, Phosphorsäuren, Essigsäure, Propionsäuren, Benzolsäuren, Stearin-Säuren, Palmitinsäure, Maleinsäure, Ameisensäure; anorganische und organische Salze wie Halogenide, Sulfate, Acetate, Formate, Benzoate, Nitrate, Nitrile, Stearate von Alkali- und Erdalkalimetallen sowie Alkohole, Epoxide, Anhydride und Amide. Wenn diese Agentien selbst flüssig sind, können sie als solche eingesetzt werden, aber auch als Lösungen, Dispersionen oder Suspensionen in geeigneten Medien. Für feste Agentien ist nur diese Art des Einsatzes möglich.

Bevorzugt als flüssige Agentien sind Mischungen von Salzen und Mineralsäuren und/oder $C_1$-$C_8$-Carbonsäuren, bevorzugt $C_1$-$C_3$-Carbonsäuren, insbesondere wenn sie pH-Puffergemische darstellen. Besonders bevorzugt sind Agentien, die die Polymerisat-Dispersionen normalerweise koagulieren oder Aufrahmen.

Polymerisate aus olefinisch ungesättigten Monomeren, mit thermoplastischem Charakter sind erfindungsgemäß besonders geeignet.

Bevorzugte Polymerisate sind solche von Styrol, p-Methylstyrol, α-Methylstyrol, Halogenstyrolen, Acrylnitril, Methacrylnitril, Vinylchlorid, Vinylacetat, $C_1$-$C_8$-Methacrylsäureestern, Maleinsäureanhydrid, Maleinsäureester, Maleinsäureimiden, $C_1$-$C_8$-Acrylsäureestern, Ethylen, Propylen, Butadien, Buten-1, Isopren, Chloropren sowie Misch- und Pfropfmischpolymerisate dieser Monomeren.

Bevorzugte Polymerisate sind:

Harzartige Polymere, Pfropfpolymerisate auf Kautschuke, insbesondere teilvernetzte, teilchenförmige Pfropfkautschuke, oder auch deren Mischungen mit teilchenförmigen, vernetzten Kautschuken.

Besonders bevorzugt sind Pfropfpolymerisate in wäßriger Emulsion; solche Pfropfpolymerisate bestehen aus einem Kautschukanteil, vorzugsweise Dien- oder Acrylatkautschuk, sowie aufgepfropften Harzpolymeren von Styrol, α-Methylstyrol, Methylmethacrylat, Acrylnitril, Vinylacetat. Besonders bevorzugte Pfropfpolymerisate haben Kautschukgehalte von 5 bis 80, insbesondere 10 bis 80 Gew.-%. Die entsprechenden Emulsionen, die bei dem erfindungsgemäßen Verfahren verwendet werden, enthalten Teilchen eines mittleren Durchmessers von 0,06 bis 3 μm, insbesondere 0,08 bis 0,9 μm, ermittelt durch Lichtstreuungsmessungen.

Bevorzugte Emulsionen sind deutlich alkalisch oder deutlich sauer und werden im erfindungsgemäßen Verfahren durch Säuren oder Basen als Agentien "neutralisiert" oder in ihrem pH-Wert oder deren Leitfähigkeit verändert (z.B. durch Elektrolytzusatz).

Besonders geeignet sind Emulsionen mit pH-Werten von 8 bis 12, die im erfindungsgemäßen Verfahren mit Carbonsäure und gegebenenfalls zusätzlichen Mineralsäuresalzen so behandelt werden, daß die Polymerisatpulver pH-Werte kleiner als 7 besitzen.

Geeignete Zerstäubungsaggregate für das erfindungsgemäße Verfahren sind z.B. rotierende Zerstäuberscheiben oder -tassen, Ein- und Mehrstoffdüsen mit und ohne Hilfsenergie (z.B. mechanische Vibration) sowie Mischdüsen mit Innen- oder Außenvermischung. Besonders geeignet sind Mischdüsen, welche für intensive Durchmischung der beteiligten Flüssigkeiten sorgen. Dies kann erreicht werden, wenn im Inneren einer Düse ein schnell rotierender Flüssigkeitsfilm der einen Komponente von einem ebenfalls in Rotation versetzten Film oder Strahl der zweiten Komponente getroffen wird und unmittelbar nach der Vermischung das Gemisch durch eine Düsenbohrung austritt und infolge der Rotation in feine Tröpfchen zerreißt. Bei Düsen mit Außenvermischung treffen die beteiligten Flüssigkeiten erst nach Verlassen der Düse in Sprühform aufeinander und vermischen sich dann. Eine weitere Möglichkeit der Vermischung der Flüssigkeiten besteht darin, sie in bekannten Vorrichtungen (z.B. Rotationsmischkammer) zu mischen und unmittelbar danach in bekannten Zerstäubungsaggregaten wie Rotations-, Ultraschall-, Druck-Drall- oder pneumatischen Zerstäubern zu zerteilen. Das Arbeiten in Zerstäubungsaggregaten allgemein ist bekannt (siehe Masters, K.: Spray-Drying; Leonard Hill, London, 1972). Einspeisen bedeutet die Zufuhr eines Flüssigkeitsstromes in das beschriebene Zerstäubungsaggregat durch freien Zulauf, aus einer Druckvorlage oder durch geeignete Pumpen über Schlauch- oder Rohrleitungen.

Durch Einsatz von Mischdüsen können mittlere Verweilzeiten unter 0,1 sec. erreicht werden, während bei Vermischung vor dem Zerstäubungsaggregat höhere Verweilzeiten auftreten können. Bei dem erfindungsgemäßen Verfahren werden durch Einsatz einer Mischdüse Verweilzeiten von höchstens 1 sec. erzielt.

Nach der Zerstäubung trocknet das Polymerisat durch Verdunstung in einem heißen Gasstrom oder durch Verdampfung in einem Heißdampfstrom. Eine bevorzugte Arbeitsweise ist im folgenden beschrieben:

Ein als wäßrige Emulsion vorliegendes Polymerisat wird einer Mischdüse mit Innenvermischung zugeführt. Das flüssige Agens stellt eine Lösung eines anorganischen Salzes und/oder einer organischen Säure dar, die mit der Emulsion in der Mischdüse zudosiert und vermischt wird. Beide Flüssigkeiten werden mit Pumpen in die Düse eingespeist, wobei vor der Düse Drücke von 10 bis 30 bar auftreten. Nach intensiver Vermischung verläßt das Gemisch die Düse z.B. in Form eines Hohlkegelsprühs, welcher in den Heißgasstrom bzw. Heißdampfstrom eines Sprühtrocknerturmes gelangt. Bei Heißgas-Eintrittstemperaturen von 50 bis 400°C, insbesondere 100 bis 200°C, und Austrittstemperaturen von 50 bis 2000°C, insbesondere 70 bis 150°C, trocknet das Polymerisat zu einem Pulver, das besonders vorteilhafte anwendungstechnische Eigenschaften besitzt, ohne einen weiteren Reinigungsschritt zu durchlaufen.

Die gemäß der Erfindung hergestellten Polymerisate besitzen verbesserte thermoplastische Verarbeitbarkeit und Thermostabilität als übliche durch Zerstäubungstrocknung hergestellten Pulver. Die vorteilhaften Eigenschaften machen sich besonders dann bemerkbar, wenn man die verbesserten Pulver zur Modifizierung Vinylchloridpolymerisaten einsetzt.

Beispiele

I) Eingesetzte Polymerisat-Emulsionen

Polymerisat-Emulsion A

Als Pfropfbasis wird ein Styrol/Butadien-Kautschuklatex (SBR-Latex), enthaltend ein Copolymerisat 35 Gew.-% Styrol und 64 Gew.-% Butadien, eingesetzt. Der Latex besitzt einen Polymergehalt von 32,4 Gew.-%, einen mittleren Latexteilchendurchmesser ($d_{50}$-Wert) von 120 nm; das Copolymer besitzt einen Gelgehalt von 88 Gew.-%. Der Latex wurde durch radikalische Emulsionspolymerisation bei 60°C mit Kaliumperoxidisulfat als Initiator und Na-Salz disproportionierter Abietinsäuren bei pH-Werten von 11 bis 12 hergestellt. Das Pfropfpolymerisat wird nach folgender Tabelle hergestellt.

Tabelle 1

|  | Gew.-Teile |
|---|---|
| Lösung 1: SBR-Latex | 1.723 |
| Wasser | 1.140 |
| Lösung 2: Kaliumperoxidisulfat | 10 |
| Wasser | 300 |
| Lösung 3: α-Methylstyrol | 773 |
| Methylmethacrylat | 1.243 |
| Acrylnitril | 224 |
| tert.-Dodecylmercaptan | – |
| Lösung 4: Wasser | 3.000 |
| Na-Salz disproportionierter Abietinsäure | 45 |
| 1 n Natronlauge | 40 |

In einem Reaktor wird vorgelegt die Lösung 1; nach Aufheizen auf 70°C und nach Initiierung mit Lösung 2 werden die Lösungen 3 und 4 innerhalb von 5 Stunden zudosiert. Anschließend wird bei 70°C 4 Stunden nachpolymerisiert. Nach Abkühlung auf 20°C stabilisiert man den Latex mit 1,2 Gew.-Teilen phenolischen Antioxidantien, bezogen auf 100 Teile Pfropfpolymerisat.

Polymerisat-Emulsion B

Wäßrige Emulsion eines Pfropfpolymerisats von 30 Gew.-% Acrylnitril und 70 Gew.-% STyrol auf einen Polybutadienkautschuk (mittlerer Teilchendurchmesser ($d_{5\,0}$) 0,38 μm; Gelgehalt 88 Gew.-%); das Pfropfpolymerisat enthält 30 Gew.-% Kautschuk und 70 Gew.-% Styrol/Acrylnitril-Harz. Die Emulsion wurde hergestellt durch radikalische Emulsionspolymerisation (initiiert mittels Kaliumperoxidisulfat) eines Styrol-Acrylnitril-Gemisches auf das Polybutadien bei einem pH-Wert von 10 bis 12 unter Einsatz von Na-Salzen disproportionierter Abietinsäuren als Emulgatoren. Polymerisationstemperatur: 60 bis 70°C.

II) Aufarbeitung

Allgemeine Verfahrensbeschreibung

Die Polymerisat-Emulsion wird mit einer Dosierpumpe einer Mischdüse mit Innenvermischung zugeführt. Das flüssige Agens stellt eine wäßrige Lösung eines anorganischen Salzes und/oder einer organischen Säure dar; sie wird ebenfalls mit einer Dosierpumpe in einem festgelegten Mengenverhältnis zur Polymerisat-Emulsion der Düse zugeführt. Das entstehende Gemisch verläßt die Düse, die sich am oberen Ende eines Sprühtrocknerturmes befindet, als Hohlkegelsprüh bestehend aus Tröpfchen von 10 bis 500 μm Durchmesser. Als Trocknungsmedium dient Luft mit reduziertem Sauerstoffgehalt (unter 5 %), die unter Stickstoffzugabe rezirkuliert und bei Eintritt in den Sprühtrockner Temperaturen $T_{Ein}$ von 150 bis 200°C und am Trockneraustritt Temperaturen $T_{Aus}$ von 50 bis 100°C aufweist. Im Sprühtrocknerturm wird das Polymerisat vom Anfangswassergehalt von 50 bis 80 % auf Restwassergehalte zwischen 0,05 und 2 % getrocknet, wobei in den fliegenden Tröpfchen eine Agglomeration und/oder chemische Reaktion stattfinden kann, die die physikalischen Eigenschaften des Polymerisatpulvers verbessert.

II1) Aufarbeitung von Polymerisat-Emulsion A nach dem oben beschriebenen Verfahren:

Lufttemperaturen: $T_{Ein}$ = 170°C ± 5°C, $T_{Aus}$ = 80°C ± 3°C. Die Luftmenge entspricht dann etwa dem 25- bis 30-fachen der zu verdunstenden Wassermenge. Emulsion A wird mit einer Exzenterschneckenpumpe einer Innen-Mischdüse der Fa. Schlick, Typ 770/1 als Hauptmassenstrom zugeführt, wobei der Düsenvordruck bei etwa 15 bar liegt. Eine Lösung von 30 g Magnesiumsulfat pro 5 g Essigsäure in 250 g Wasser kleinerer Flüssigkeitsstrom mit einer entsprechend kleineren Dosierpumpe pro 1 kg Feststoff der Emulsion A zudosiert. Das getrocknete Polymerisatpulver weist nach Vorlassen des Sprühtrockners und Abscheiden aus dem Luftstrom Restfeuchten von 0,2 bis 0,8 % auf.

4

II2) Aufarbeitung von Emulsion B nach dem oben beschreibenen Verfahren

Lufttemperaturen: $T_{Ein}$ = 160 bis 170°C; $T_{Aus}$ = 80°C ± 3°C. Die Luftmenge entpsricht etwa dem 25- bis 30-fachen der zu verdunstenden Wassermenge. Emulsion B wird mit einer Exzenterschneckenpumpe einer Innen-Mischdüse der Fa. Schlick, Typ 770/1 als Hauptstrom zugeführt, wobei der Düsenvordruck etwa 10 bis 12 bar beträgt. 100 g einer 4 gew.-%igen Lösung von Magnesiumsulfat ($MgSO_4$) in Wasser pro 1 kg Feststoff der Emulsion B werden mit einer Dosierpumpe der Mischdüse zugeführt. Das getrocknete Polymerisatpulver weist nach Verlassen des Sprühtrockners und Abscheiden aus dem Luftstrom einer Restfeuchte von ca. 0,5 % auf.

II3) Aufarbeitung von Emulsion B

Analog dem Verfahren II2) mit 100 g 3 gew.-%iger Lösung von Calciumformiat, pro 1 kg Feststoff in Emulsion B. Das getrocknete Pulver weist nach Verlassen des Sprühtrockners und Abscheiden aus dem Luftstrom Restfeuchten von ca. 0,5 Gew.-% auf.

II4) Verfahren zur Aufarbeitung von Emulsion B

Es wurde analog II3) verfahren mit wäßriger Lösung von Aluminiumsulfat. Die Restfeuchten des Pulvers lagen bei 0,3 bis 0,5 Gew.-%.

III) Vergleichsbeispiele

Sprühtrocknung nach bekannten Verfahren (näheres siehe Masters, K. "Spray Drying", Leonard Hill, London, 1972) ohne Elektrolytzugabe.
Die Polymerisat-Emulsion wird mit einer Pumpe einer Druckdüse (Einstoffdüse) oder einer pneumatischen Düse (Zerstäubung mit Druckluft) zugeführt. Der entstehende Tropfensprüh trocknet in einem Sprühtrockner in einem Heißgasstrom ab, der unter Stickstoffzugabe rezirkuliert. Die Tropfengröße beträgt 5 bis 500 µm. Die Luft-Eintrittstemperatur $T_{Ein}$ ist 150 bis 200°C, die Abluft-Temperatur ist 50 bis 100°C. Der Düsenvordruck liegt bei Druckdüsen bei 10 bis 30 bar, bei pneumatischen Düsen zwischen 1,5 und 10 bar.

III1) Vergleich für Polymerisat-Emulsion A zu II1) nach diesem Verfahren:

Polymeremulsion A wird in einer Druckdüse der Fa. DELAVAN TYP SDX mit 25 bar Düsenvordruck zerstäubt. Bei $T_{Ein}$ ~ 170°C und $T_{Aus}$ ~ 80°C ist die Luftmenge etwa das 25- bis 30-fache der zu verdunstenden Wassermenge. Das getrocknete Polymerisatpulver weist nach Verlassen des Sprühtrockners und Abscheiden aus dem Luftstrom Restfeuchten von 0,2 bis 0,8 % auf.

III2) Vergleich für Polymerisat-Emulsion B zu II2) bis II4) nach diesem Verfahren:

Die Polymerisat-Emulsion B wird in einer Druckdüse der Fa. DELAVAN Typ SDX mit 18 bar Düsendruck zerstäubt. Bei $T_{Ein}$ ~ 165°C und $T_{Aus}$ ~ 80°C ist die Luftmenge etwa das 25- bis 30-fache der zu verdunstenden Wassermenge. Das getrocknete Polymerisatpulver weist nach Verlassen des Sprühtrockners und Abscheiden aus dem Luftstrom Restfeuchten von ca. 0,5 % auf.

IV) Eigenschaften der Polymerisate als Modifikatoren für Polyvinylchlorid

Die Produkte II1) und III1) wurden einerseits als solche zu thermoplastischen Formmassen verarbeitet oder in Mischung mit PVC.
Zur Herstellung von PVC-Formmassen wird Polyvinylchlorid (PVC) (K-Wert 70) verwendet; als Stabilisator- und Gleitmittelzusatz werden 2 Gew.-% Ba/Cd-Laurat (Fest), 0,3 Gew.-% sterisch gehindertes phenolisches Antioxidans (fest und 0,2 Gew.-% Esterwachs zugesetzt. Die PVC-Formmassen werden auf einem Mischwalzwerk in Mischung mit II1 und III1 10 Minutes (bei 180°C) homogenisiert und bei 190°C zu Prüfkörpern verpreßt; die Zusammensetzung der Formmassen geht aus Tab. 3 hervor.
Die Produkte II1) werden im Vergleich zu Produkt III1) bei 240°C zu Formkörpern verarbeitet; sie besitzen folgende Eigenschaften:

## Tabelle 2

|                                                   | Produkt II1 | Produkt III1 |
| ------------------------------------------------- | ----------- | ------------ |
| Kerbschlagzähigkeit ($kJ/m^2$)                    | 7,9         | 6            |
| Formbeständigkeit Vicat B.(${}^{0}C$)             | 111         | 110          |
| Trübung (%)                                        | 8           | 20           |

## Tabelle 3

PVC-haltige Formmassen: Mischungen aus 60 Gew.-Teilen PVC und 40 Gew.-Teilen Pfropfpolymerisat II1) und III1)

| Blend | mit II1 | mit III1 |
|---|---|---|
| Schlagzähigkeit ($kg/m^2$) | nicht gebrochen | nicht gebrochen |
| Kerbschlagzähigkeit ($kg/m^2$) | 6,5 | 6 |
| Formbeständigkeit (Vicat B, °C) | 95 | 93 |
| Trübung (%) | 9 | 25 |
| Lichttransmission (%) | 70 | 55 |
| Rohton | farblos bis schwach gelb | gelb bis braun |
| Verarbeitbarkeit der Mischung | Formmasse zeigt kein nachteiliges Kleben auf Walzen bei der Verarbeitung | Formmasse zeigt Kleben bei der Homogenisierung auf Walzen |

### Erläuterungen zu Tab. 2 und 3:

Schlagzähigkeit und Kerbschlagzähigkeit bestimmt nach DIN 53 453
Formbeständigkeit                           bestimmt nach DIN 53 460
Trübung und Lichttransmission        bestimmt nach DIN   5 036

EP 0 274 053 B1

Tabelle 4

Messung des "Window Fogging"-Verhaltens der Pulver
(nach DIN 75 201) bei 90°C

| Produkte | Glanzmessung (%) |
|----------|------------------|
| II2 | 88 |
| II3 | 87 |
| II4 | 78 |
| III2 | 0 |

**Patentansprüche**

1. Verfahren zur Herstellung von Polymerisat-Pulvern aus Polymerisat-Dispersionen, dadurch gekennzeichnet, daß man eine Polymerisat-Dispersion kontinuierlich in ein Zerstäubungsaggregat einspeist, getrennt davon aber gleichzeitig ein flüssiges Agens, wobei Dispersion und flüssiges Agens in höchstens einer Sekunde vollständig gemischt werden und unmittelbar anschließend das Gemisch unter Verdunstung oder Verdampfung flüchtiger Anteile zu einem Pulver mit Teilchen eines mittleren Durchmessers von 0,05 bis 1 mm trocknet.

**Claims**

A process for the production of polymer powders from polymer dispersions, characterized in that a polymer dispersion and at the same time, but separately, a liquid agent are fed continuously into a spray dryer, the dispersion and the liquid agent being completely mixed in at most one second, and immediately thereafter the mixture is dried with evaporation or volatilization of volatile components to form a powder having an average particle size of 0.05 to 1 mm.

**Revendications**

1. Procédé pour préparer des poudres de polymère à partir de dispersions de polymère, procédé caractérisé en ce qu'on introduit en continu une dispersion de polymère dans un appareil de pulvérisation par atomisation, on introduit séparément mais en même temps un agent liquide, de sorte que la dispersion et l'agent liquide se mélangent totalement en une période d'au maximum 1 set, immédiatement ensuite, on sèche le mélange avec évaporation ou vaporisation des parties volatiles, ce qui donne une poudre comportant des particules dont le diamètre moyen se situe entre 0, 05 et 1 mm.